# EUROPÄISCHE PATENTSCHRIFT

(11) **EP 0 993 345 B1**
(45) Veröffentlichungstag und Bekanntmachung des Hinweises auf die Patenterteilung: **11.04.2001**
(21) Anmeldenummer: 98930523.0
(22) Anmeldetag: 02.07.1998
(51) Int. Cl.: B21D 5/00

(54) **VERFAHREN ZUM BIEGEN MIT LASERUNTERSTÜTZUNG**
LASER-ASSISTED BENDING METHOD
PROCEDE DE PLIAGE ASSISTE PAR LASER

(30) Priorität: 02.07.1997 AT 112997
(43) Veröffentlichungstag der Anmeldung: 19.04.2000
(73) Patentinhaber: Trumpf Maschinen Austria GmbH & CO. KG., 4061 Pasching (AT)
(72) Erfinder: KILIAN, Friedrich, A-4531 Kematen am der Krems (AT); SCHRÖDER, Kurt, A-2380 Perchtoldsdorf (AT); SCHUÖCKER, Dieter, A-1130 Wien (AT)
(74) Vertreter: Secklehner, Günter, Dr.
(86) Internationale Anmeldenummer: AT9800163
(87) Internationale Veröffentlichungsnummer: WO9901239

(56) Entgegenhaltungen:
- DE-C- 877 617
- PATENT ABSTRACTS OF JAPAN vol. 017, no. 433 (M-1461), 11. August 1993 -& JP 05 096329 A (AMADA CO LTD), 20. April 1993

## Beschreibung

Die Erfindung betrifft ein Verfahren zum Biegen eines Werkstücks durch eine mechanische Kraft unter gleichzeitiger selektiver Erwärmung des Werkstücks entlang der Biegekante durch mindestens einen Laserstrahl, wie in US-A-5 359 872 offenbart.

Beim Biegen im V-Gesenk wird das zu biegende Blech in bekannter Weise zunächst über ein Gesenk der Breite w gelegt, worauf ein Biegestempel in der Mitte zwischen den als Auflagern wirkenden Endpunkten des Vs angreift. Die durch diesen Stempel bewirkte Krafteinwirkung und die dadurch in den Auflagepunkten erzeugten Reaktionskräfte bewirken im Blech ein Biegemoment, durch das sich das Blech verbiegt, wodurch sich der Stempel in Richtung des Scheitelpunktes des Gesenks weiterbewegt. In der ersten Phase des Biegevorganges erfolgt dabei ein freies Biegen, was bedeutet, daß sich die Biegelinie alleine aufgrund der Momentverteilung im Blech einstellt und keine Beeinflussung durch die Schenkel des Gesenks bzw. durch die Form des Stempels - abgesehen von der mit dem Blech in Kontakt stehenden Rundung - erfolgt.
Der eigentliche Einfluß des Gesenks und des Stempels macht sich erst dann bemerkbar, wenn sich das Blech aufgrund des sich einstellenden Biegeradius von den ursprünglichen Auflagepunkten am Gesenk ablöst und diese entlang der Schenkel in Richtung des Scheitelpunktes wandern. Dabei wird nach und nach ein formschlüssiger Kontakt zwischen Gesenk und Stempel erreicht, was die für das Gesenkbiegen charakteristische geringe Rückfederung bzw. den genau definierten Biegeradius zur Folge hat. Diese zweite Phase des Gesenkbiegens wird auch Nachdrücken oder Nachprägen genannt. Diese Phase ist durch ein starkes Ansteigen der durch die Presse aufzubringende Kraft gekennzeichnet.

Die Grenzen der Anwendbarkeit des Gesenkbiegens werden nun einerseits durch die Materialeigenschaften wie die Bruchdehnung und die Fließspannung festgelegt und andererseits durch die geometrischen Gegebenheiten wie die Gesenkweite und die Abmessungen des Blechs. Wie die bekannte Theorie des Biegens zeigt, ist die erforderliche Biegekraft während des freien Biegens dabei proportional der Fließspannung, der Breite des Blechs, sowie dem Quadrat der Dicke des Blechs, sodaß bei einer durch die Konstruktion der Presse bedingten maximal zur Verfügung stehenden Pressenkraft Grenzen in bezug auf die Werkstoffeigenschaften bzw. die Werkstückabmessungen bestehen. In der Prägephase ist die Kraft hingegen nur noch linear von der Blechdicke abhängig, wobei insgesamt der Kraftbedarf aber etwa um den Faktor 30 höher ist als während des freien Biegens.

Eine weitere Begrenzung ergibt sich durch die Bruchdehnung, bei deren Überschreitung Risse an der Biegekante auftreten. Wie die bekannte Theorie des Biegens ebenfalls zeigt, tritt dabei die kritische Belastung in der äußersten Faser des gebogenen Werkstücks auf, wobei die dort entstehende Dehnung vom Kehrwert des Biegeradius abhängt. Ein geringer Biegeradius - und dieser wird in der Praxis meist angestrebt - setzt damit einen hohen Wert der Bruchdehnung voraus.

Es ist nun eine bekannte Tatsache der Materialkunde, daß die Fließspannung im allgemeinen mit der Werkstücktemperatur sinkt, während hingegen die Bruchdehnung ansteigt. Ausnahmen bilden hier Werkstoffe, wie etwa Stahl, die eine ausgeprägte Blausprödigkeit zeigen, bei denen die letztere Aussage nur oberhalb einer für den jeweiligen Werkstoff charakteristischen Grenztemperatur (größenordnungsmäßig 200°C) gilt.

Das Temperaturverhalten der Fließspannung legt es daher nahe, in an sich bekannter Weise den Werkstoff vor oder während des Biegevorganges zu erwärmen, sodaß der minimale zu erzielende Biegeradius bzw. die erforderliche Maximalkraft sinken. Eine Aufheizung des gesamten Werkstücks ist dabei jedoch nicht sinnvoll, da dies viel Energie erfordert, zu Verzug oder Verzunderung führt und unerwünschte Veränderungen im Gefüge des Werkstoffs bewirkt. Zur Vermeidung der Probleme, die mit der Aufheizung des gesamten Werkstücks verbunden sind, existiert die an sich bekannte Möglichkeit, das Werkstück mittels eines Laserstrahls selektiv zu erwärmen, das heißt die Energie nur an denjenigen Stellen zuzuführen, an welchen der eigentliche Umformvorgang im Werkstück stattfindet. Dies ist im Fall des Gesenkbiegens ein linearer Bereich entlang der Biegekante, wobei die äußere Zone, das ist derjenige Bereich in dem die maximale Zugspannung im Blech auftritt, besonders günstig auf Erwärmung reagiert, da dort als erstes Risse zufolge Überschreitung der Zugfestigkeit zu erwarten sind.

In US 5,359,872 A und in DE 42 28 528 A1 wird gemäß dieser Überlegungen ein auf der einen Seite fest eingespanntes und auf der anderen Seite durch einen Roboter gehaltenes Blech durch einen Laserstrahl entlang der gewünschten Biegelinie mit hoher Geschwindigkeit periodisch abgefahren, worauf der Roboter eine Biegekraft appliziert und das Blech entlang der vorgewärmten Biegelinie biegt. Als Nachteil zeigt sich hier jedoch, daß durch die Pendelbewegung des Laserstrahls die einzelnen Punkte der Biegelinie nur jeweils für einen kurzen Zeitabschnitt durch den Laserstrahl erwärmt werden, sodaß sich ein periodisch schwankendes Temperaturfeld ergibt, das zudem noch eine Phasenverschiebung längs der Biegelinie zeigt. Durch eine hohe Frequenz der Pendelbewegung läßt sich dabei sicherstellen, daß diese Temperaturschwankungen hinreichend klein bleiben. Insbesondere kann es aber durch die kurzzeitig einwirkenden hohen Intensitäten zu einer lokalen Überhitzung - im Extremfall sogar zum Aufschmelzen - bzw. zu hohen Abkühlungsgeschwindigkeiten kommen, wodurch die metallurgischen Eigenschaften des Blechs im Bereich der Biegelinie ungünstig beeinflußt werden. Dieses Problem wird dabei desto schwerwiegender, je höher die zu applizierende Laserleistung wird, d.h. je dickere Bleche bzw. je längere Biegelinien zu bearbeiten sind. Als weiterer Nachteil muß angeführt werden, daß aufgrund der geometrischen Gegebenheiten der Laserstrahl immer auf die Seite mit der Druckbeanspruchung auf das Werkstück einwirkt, wobei jedoch bekannt ist, daß die kritische Zone beim Biegen diejenige mit der maximalen Zugspannung ist, wodurch es zu Rißbildungen bei Unterschreitung des minimalen Biegeradius kommen kann.
Zur Erzeugung der oben beschriebenen Pendelbewegung sind dabei neben der in DE 42 28 528 A1 beschriebenen optischen Wandlereinrichtung auch noch schraubenlinienförmig auf einer Trägerwalze montierte Reflektoren, wie etwa in EP 0 536 683 A1 dargestellt, geeignet.

Um die gemäß US 5,359,872 A und DE 42 28 528 A1 auftretenden nachteiligen zeitlichen Temperaturschwankungen vollkommen vermeiden zu können, müßte die Erwärmung entlang der Biegelinie durch einen zu einer Brennlinie geformten Laserstrahl bewerkstelligt werden. Um eine derartige Formung des Laserstrahls vorzunehmen sind ebenfalls schon zahlreiche Lösungen bekannt. Die in AT 138 837 T beschriebene Methode verwendet etwa eine Kombination aus zylindrischen Spiegeln und Linsen um einen linienförmigen Fokus zu erzeugen, mit dem dann ein durchlaufendes Blech entlang seiner Breite wärmebehandelt wird, um dessen Magneteigenschaften günstig zu beeinflussen. Andere Möglichkeiten werden etwa in EP 0 549 357 A1 beschrieben, welche sowohl für Laserstrahlung als auch für die Strahlung konventioneller Lampen anwendbar sind. Die bei einigen der in EP 0 549 357 A1 eingeführten Optiken zur Strahlführung auftretenden hohen Energieverluste sind dabei offensichtlich gut zu handhaben, da die für die dort betrachtete Bearbeitung von Geweben und Kunststoffen erforderlichen Strahlleistungen gering sind. Durch die geometrische Auslegung einer Vorrichtung zum Biegen, sowie die dort erforderlichen hohen Strahlleistungen, sind die genannten Verfahren zur Formung eines linienförmigen Erwärmungszone jedoch nicht geeignet.

Die Erfindung wird durch die gesamten Merkmale des Anspruchs 1 definiert.

Gemäß der gegenständlichen Erfindung wird das Problem der periodisch schwankenden Temperaturverteilung umgangen, indem der Laserstrahl als linienförmiges Strahlenfeld jedem Punkt der Biegelinie zugeführt wird. Durch diese Maßnahme ergeben sich zu jedem Zeitpunkt an jeder Stelle der Biegelinie identische Verhältnisse, sodaß der Biegevorgang vollkommen homogen über der Länge eines Werkstückes abläuft. Zur Erzeugung des linienförmigen Strahlenfeldes und der Zufuhr des Strahlenfeldes an die Biegelinie werden dabei erfindungsgemäß die Vorrichtungen zur Strahlformung und -zufuhr in die für das Biegen benötigten Vorrichtungen zur Einleitung der mechanischen Krafteinwirkung integriert. Vorzugsweise läßt sich die gegenständliche Erfindung dabei beim Vorgang des Gesenkbiegens anwenden, sodaß die mechanischen Kräfte durch Biegestempel und Biegegesenk auf das Werkstück übertragen werden. Ein zusätzlicher Vorteil des gegenständlichen Verfahrens liegt in der Tatsache, daß Laserstrahl nun an derjenigen Seite des Werkstückes auftrifft, an der die maximale Zugspannung auftritt.

Die Zufuhr der Laserstrahlung an die vom Biegestempel abgewandten Oberfläche des Werkstückes erfolgt dabei in einer beispielhaften Ausführung der Erfindung durch ein System von Zylinderlinsen und/oder Zylinderspiegel. Es werden dabei die an sich bekannten Gesetze der Optik ausgenutzt, die es ermöglichen durch zwei zylindrische Linsen und/oder Spiegel mit normalstehenden Achsen die Divergenz und den Taillendurchmesser eines Laserstrahls in zwei aufeinander normalstehenden transversalen Richtungen unabhängig voneinander zu beeinflussen. Durch die entsprechende Auslegung des optischen Systems wird ein linienförmiges Strahlenfeld und damit eine Erwärmungszone entlang der Biegelinie erzeugt, das so berechnet ist, daß es sich mit dem Bereich, in dem die plastische Umformung des zu biegenden Werkstoffs erfolgt, deckt.

Eine weitere Ausführung der Erfindung basiert auf der Verwendung eines an sich bekannten geschlitzten Hohlleiters. Ein beispielsweise aus Kupfer gefertigter Hohlleiter ist dabei in der Lage, den Strahl eines CO₂ Lasers mit geringen Verlusten zu übertragen, was auf der verlustarmen Mehrfachreflexion innerhalb des Hohlleiters beruht. Durch Anbringung eines Schlitzes wird ein vom Verhältnis zwischen der Schlitzbreite zum Umfang des Hohlleiters abhängiger Leistungsbetrag aus dem Hohlleiter ausgekoppelt, wobei dieser Teil dann auf den Werkstoff, beispielsweise Stahl, auftrifft und reflektiert wird. Da die Reflexionsverluste in Stahl wesentlich höher sind als in Kupfer, wird dabei über die gesamte Länge der Biegekante gesehen ein Großteil der ursprünglich in den Hohlleiter eingekoppelten Leistung absorbiert. Zur Anpassung der pro Längeneinheit in das Werkstück eingekoppelten Leistung stehen dabei, abgesehen von der Laserleistung, die Spaltbreite und der Innendurchmesser des Hohlleiters zur Verfügung, wobei beide Parameter auch mit der Länge variieren dürfen. Zur Verringerung der Verluste im Hohlleiter bzw. zur Sicherung der niedrigen Verluste über eine lange Zeitdauer, besteht die Option die Innenseite des Hohlleiters in an sich bekannter Weise poliert auszuführen und mit einer Gasströmung in axialer Richtung zu spülen. Da die axiale Leistungsdichte im Hohlleiter zufolge der Absorption durch das Werkstück abnimmt, besteht erfindungsgemäß die weitere Möglichkeit, den Laserstrahl von beiden Seiten des Hohlleiters her in diesen einzukoppeln.

Zur Herstellung eines guten Kontakts zwischen Werkstück und Hohlleiter besteht die weitere erfindungsgemäße Möglichkeit, den Hohlleiter durch einen Gegenhalter mit Federkraft gegen die Biegekante zu drücken, sodaß dieser immer formschlüssig an der Biegekante anliegt. Im Bereich des Scheitelpunkts des Gesenks wird dann eine Ausnehmung vorgesehen, die den Hohlleiter in der Endphase des Biegevorganges aufnimmt, sodaß als Endzustand Biegegesenk, Biegestempel, Blech und Hohlleiter formschlüssig miteinander in Kontakt stehen.

In einer weiteren Ausführung der Erfindung werden mehrere durch eine zylindrische Optik bzw. durch einen Hohlleiter erzeugte linienförmige Strahlenfelder hintereinander bzw. überlappend angeordnet. Die für diesen Zweck erforderliche größere Anzahl an Laserstrahlen wird entweder durch einen einzigen, nach an sich bekannten Methoden geteilten Laserstrahl hoher Leistung oder durch mehrere Laser geringerer Leistung erzeugt.

Es besteht weiters die erfindungsgemäße Möglichkeit auch durch Wahl der Betriebsart des Lasers, wie Dauerstrich oder gepulst, die Erwärmungs- und Abkühlungsverläufe im Werkstoff einzustellen. Alle Punkte der Biegelinie werden dabei jedoch gleichzeitig mit Laserstrahlung beaufschlagt.

Schließlich ist aber auch ein Verfahren von Vorteil bei dem linienförmige Strahlenfelder sowohl durch das Ober- und Untergesenk des Biegewerkzeuges hindurchgeführt und zur Bildung einer gleichmäßigen Erwärmungszone bei den entgegengesetzten Oberflächen des Werkstücks entlang der Biegelinie zugeführt werden, wodurch für das Biegen aufgrund der Werkstoffeigenschaften nur bedingt geeignete Materialien verarbeitet werden können oder aber auch Werkstücke die eine größere Dicke aufweisen. Die Erfindung wird nachfolgend anhand der in den Figuren gezeigten Ausführungsbeispielen beschrieben.

Es zeigen:
- Fig. 1: eine Vorrichtung zur Durchführung des erfindungsgemäßen Verfahrens in Ansicht;
- Fig. 2: die Vorrichtung nach Fig. 1 nach erfolgtem Verfahren in Ansicht;
- Fig. 3: eine Vorrichtung zur Durchführung einer weiteren Variante des erfindungsgemäßen Verfahrens in Ansicht;
- Fig. 4: die Vorrichtung nach Fig. 3 in Seitenansicht;
- Fig. 5: eine Vorrichtung zur Durchführung einer anderen Variante des erfindungsgemäßen Verfahrens in Ansicht.

Einführend sei festgehalten, daß in den unterschiedlich beschriebenen Ausführungsformen gleiche Teile mit gleichen Bezugszeichen bzw. gleichen Bauteilbezeichnungen versehen werden, wobei die in der gesamten Beschreibung enthaltenen Offenbarungen sinngemäß auf gleiche Teile mit gleichen Bezugszeichen bzw. gleichen Bauteilbezeichnungen übertragen werden können. Auch sind die in der Beschreibung gewählten Lageangaben, wie z.B. oben, unten, seitlich usw. auf die unmittelbar beschriebene sowie dargestellte Figur bezogen und sind bei einer Lageänderung sinngemäß auf die neue Lage zu übertragen.

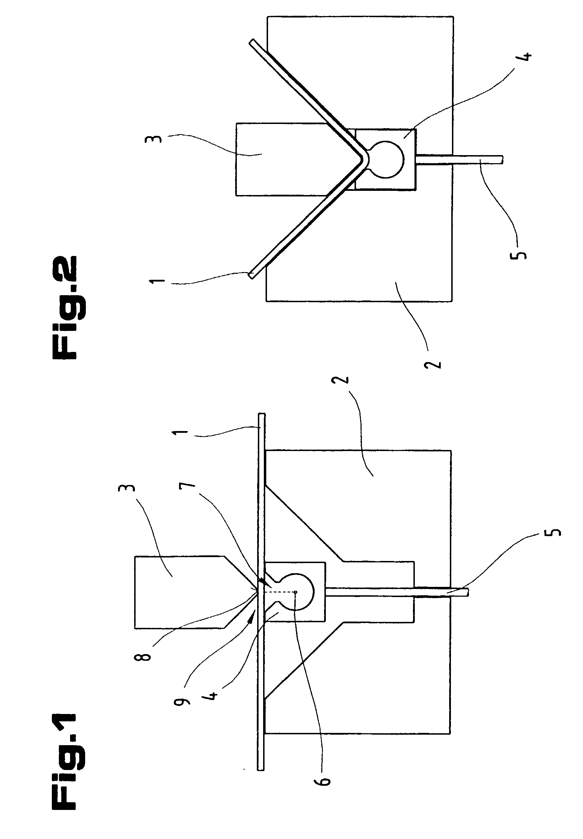

Die Fig. 1 und 2 zeigen eine beispielhafte Ausführungsform für eine Vorrichtung zur Durchführung des erfindungsgemäßen Verfahrens zum Biegen eines Werkstückes, bei der ein Hohlleiter für Laserstrahlen zur Erwärmung des Werkstücks verwendet wird. In Fig. 1 ist dabei die Stellung unmittelbar vor dem Biegevorgang, in Fig. 2 nach dem Biegevorgang, gezeigt. Zu Beginn des Biegevorganges liegt ein Werkstück, z.B. ein Blech 1, zunächst auf einem Gesenk 2, wobei von oben ein Biegestempel 3 am Blech 1 ansetzt. Von unten wird ein geschlitzte Hohlleiter 4 über einen Gegenhalter 5 an das Blech 1 gedrückt. Beim Biegevorgang wird nun ein Laserstrahl 6 zur Erwärmung des Werkstücks in Längsrichtung in den Hohlleiter 4 eingekoppelt, wodurch ein linienförmiges Strahlenfeld 7 entsteht, das längs einer beabsichtigten Biegelinie 8 eine Erwärmungszone 9 am Werkstück ausbildet und gleichzeitig drückt der Biegestempel 3 auf das Blech 1, wodurch dieses gebogen wird. Der geschlitzte Hohlleiter 4 wird dabei erfindungsgemäß vom Gegenhalter 5 während des Biegevorganges an das Blech 1 gedrückt, wodurch dieser stets in der gleichen Lage relativ zur Biegekante bleibt. In der Endstellung - wie der Fig. 2 zu entnehmen - befindet sich das Blech 1 dann formschlüssig zwischen Gesenk 2 Biegestempel 3 und Hohlleiter 4, wobei sich der Hohlleiter 4 nun in seiner tiefsten Stellung in einer Ausnehmung im Gesenk 2 befindet.

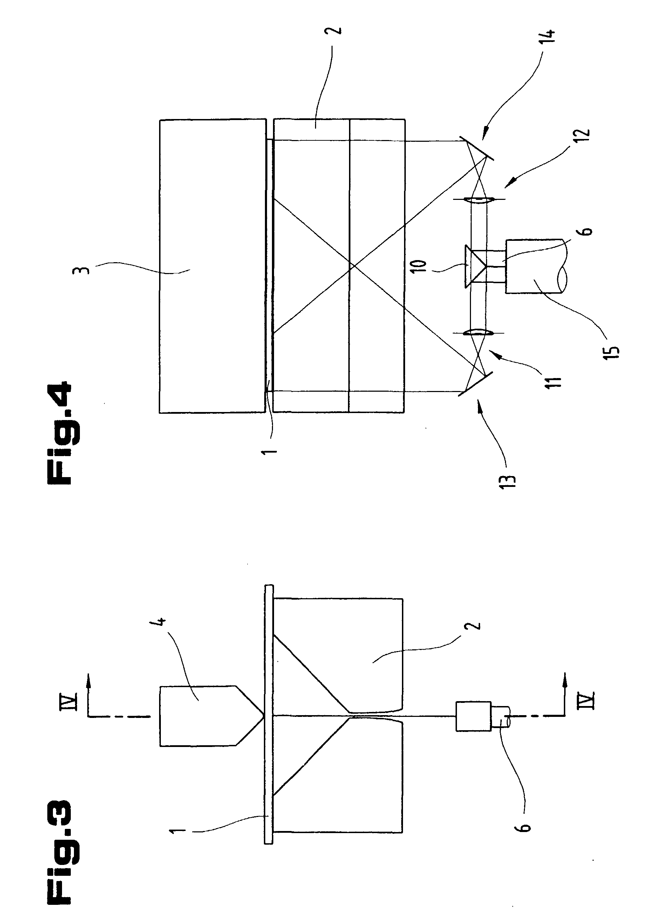

Die Fig. 3 und 4 zeigen eine weitere beispielhafte Ausführungsform für eine Vorrichtung zur Durchführung des erfindungsgemäßen Verfahrens. Das Blech 1 wird wieder auf das Gesenk 2 gelegt, während der Biegestempel 3 von der Gegenseite längs der Biegelinie auf das Werkstück drückt. Der Laserstrahl 6 wird durch die strahlformende Optik, bestehend aus einem Prismenspiegel 10, zwei Zylinderlinsen 11, 12 und zwei zylindrischen Umlenkspiegeln 13, 14 in zwei Strahlenfelder zerlegt, die jeweils eine linienförmige Erwärmungszone am Blech 1 erzeugen. Der umgeformte Laserstrahl wird dabei durch eine schlitzförmige Öffnung in der Unterseite des Gesenks 2 dem Werkstück zugeführt. Als Strahlenerzeuger 15 eignen sich mit geringen Einschränkungen sämtliche aus dem Stand der Technik bekannten Vorrichtungen.

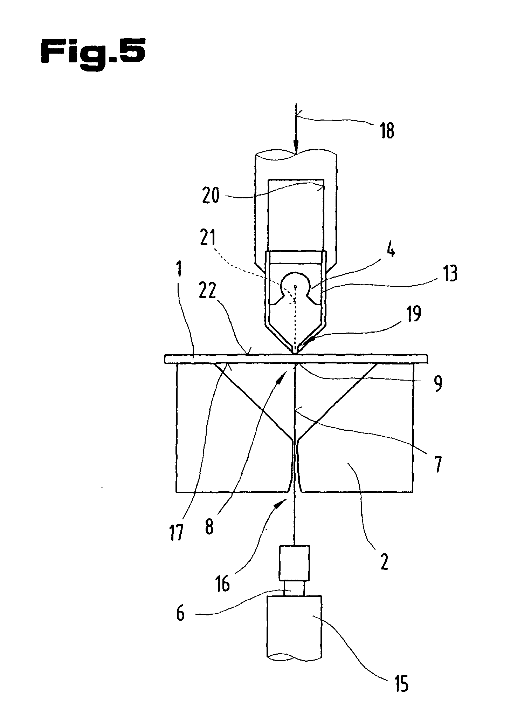

In der Fig. 5 ist eine Vorrichtung für eine Variante des erfindungsgemäßen Verfahrens zum Biegen des Bleches 1 gezeigt. Vor bzw. während des Biegevorganges, bei dem das Biegeelement 3 in Richtung des Gesenkes 2 bewegt wird, wird durch eine schlitzförmige Öffnung 16 im Gesenk 2 das Strahlenfeld 7, wie bereits in den Fig. 3 und 4 beschrieben auf eine dem Gesenk 2 zugewandte Oberfläche 17 zur Bildung der Erwärmungszone 9 längs der Biegelinie 8 zugeführt. Der zur Aufbringung der Krafteinwirkung gemäß einem Pfeil 18 vorgesehene Biegestempel weist ebenfalls eine längs der Biegelinie 8 verlaufende schlitzförmige Öffnung 19 auf. In einer Ausnehmung 20 ist im Biegestempel 3 der Hohlleiter 4 angeordnet, über den ein weiteres Strahlenfeld 21 durch die schlitzförmige Öffnung 19 hindurch zur Einwirkung längs der Biegelinie 8 auf die der Oberfläche 17 entgegengesetzte Oberfläche 22 des Bleches 1 zur Einwirkung gebracht wird.

Dieses Verfahren ist besonders für das Biegen aufgrund von Materialeigenschaften schwierigen Werkstücken bzw. Materialien geeignet. Nach diesem Verfahren lassen sich unterschiedliche Temperaturen in gegenüberliegenden Erwärmungszonen längs der Biegelinie 8 erreichen, z.B. eine höhere Temperatur im kritischen Zugbereich der sich dem Gesenk zugewandt also an der Oberfläche 17 ausbildet gegenüber einer geringeren Temperatur im Druckbereich längs der Oberfläche 22.

Der Ordnung halber sei abschließend darauf hingewiesen, daß zum besseren Verständnis des Aufbaus einer Vorrichtung zur Durchführung des erfindungsgemäßen Verfahrens diese bzw. deren Bestandteile teilweise unmaßstäblich und/oder vergrößert und/oder verkleinert dargestellt wurden.

Die den eigenständigen erfinderischen Lösungen zugrundeliegende Aufgabe kann der Beschreibung entnommen werden.

## Patentansprüche

1. Verfahren zum Biegen eines Werkstücks durch mechanische Krafteinwirkung unter selektiver Erwärmung des Werkstücks, z.B. eines Bleches, entlang einer Biegelinie durch mindestens einen Laserstrahl, dadurch gekennzeichnet, daß aus dem mindestens einem Laserstrahl ein linienförmiges Strahlenfeld geformt wird und daß durch das Strahlenfeld an allen Punkten entlang der Biegelinie eine Erwärmungszone am Werkstück gebildet wird.

2. Verfahren nach Anspruch 1, dadurch gekennzeichnet, daß als Vorrichtung zur Formung des linienförmigen Strahlenfeldes Zylinderlinsen und/oder Zylinderspiegel verwendet werden und das Strahlenfeld durch eine Öffnung in einem Biegegesenk dem Werkstück zugeführt wird.

3. Verfahren nach Anspruch 1, dadurch gekennzeichnet, daß als Vorrichtung zur Formung des linienförmigen Strahlenfeldes ein geschlitzter Hohlleiter verwendet wird, dessen Schlitz parallel zur Biegelinie verläuft, wobei entweder an einer Seite, oder an beiden Seiten des Hohlleiters der Laserstrahl axial eingekoppelt wird.

4. Verfahren nach den Ansprüchen 1 und 3, dadurch gekennzeichnet, daß der den Laserstrahl zuführende Hohlleiter durch eine Führung parallel zur Biegelinie verschiebbar ist und an diese angedrückt wird.

5. Verfahren nach einem oder mehreren der vorhergehenden Ansprüche, dadurch gekennzeichnet, daß mehrere linienförmige Strahlenfelder räumlich versetzt derart angeordnet werden, daß die gesamte Biegelinie über deren gesamte Länge bestrahlt wird.

6. Verfahren nach einem oder mehreren der vorhergehenden Ansprüche, dadurch gekennzeichnet, daß ein gepulster Laserstrahl dem Werkstück zugeführt wird.

7. Verfahren nach einem oder mehreren der vorhergehenden Ansprüche, dadurch gekennzeichnet, daß das Strahlenfeld entlang der Biegelinie gleichmäßig zur Bildung der Erwärmungszone auf das Werkstück einwirkt.

8. Verfahren nach einem oder mehreren der vorhergehenden Ansprüche, dadurch gekennzeichnet, daß entlang der Biegelinie mehrere aneinandergereihte oder überlappende Strahlenfelder auf das Werkstück einwirken.

9. Verfahren nach einem oder mehreren der vorhergehenden Ansprüche, dadurch gekennzeichnet, daß zur Bildung der Erwärmungszone entlang der Biegelinie Strahlenfelder auf entgegengesetzte Oberflächen des Werkstückes zur Bildung der Erwärmungszone zur Einwirkung gebracht werden.

## Claims

1. Process for bending a component by means of mechanical force with selective heating of the component, e.g. a metal sheet, along a bend line by at least one laser beam, characterised in that a linear radiation field is generated from the at least one laser beam and in that a heating zone is produced on the component by means of the radiation field at all points along the bend line.

2. Process according to claim 1, characterised in that cylindrical lenses and/or cylindrical mirrors are used as a device for shaping the linear radiation field and the radiation field is conveyed through an orifice in a bending die.

3. Process according to claim 1, characterised in that a slotted hollow conductor is used as a device for shaping the linear radiation field, the slot of which runs parallel with the bend line, the laser beam being axially coupled on one side or on both sides of the hollow conductor.

4. Process according to claims 1 and 3, characterised in that the hollow conductor supplying the laser beam can be displaced by a guide parallel with the bend line and is pressed against the latter.

5. Process according to one or more of the preceding claims, characterised in that several linear radiation fields are arranged spatially offset so that the whole bend line is irradiated over its entire length.

6. Process according to one or more of the preceding claims, characterised in that a pulsed laser beam is applied to the component.

7. Process according to one or more of the preceding claims, characterised in that the radiation field along the bend line acts uniformly on the component to produce the heating zone.

8. Process according to one or more of the preceding claims, characterised in that several adjacent or overlapping radiation fields act on the component along the bend line.

9. Process according to one or more of the preceding claims, characterised in that to produce the heating zone along the bend line, radiation fields are applied to opposite surfaces of the component to produce the heating zone.

## Revendications

1. Procédé de pliage d'une pièce par des effets de forces mécaniques sous échauffement sélectif de la pièce, par exemple d'une tôle le long d'une ligne de pliage par au moins un faisceau laser, caractérisé en ce qu'il est formé à partir d'au moins un faisceau laser précité un champ de rayonnement linéaire, et en ce qu'il est formé par le champ de rayonnement à tous les points le long de la ligne de pliage une zone d'échauffement à la pièce.

2. Procédé selon la revendication 1, caractérisé en ce que, comme dispositif pour former le champ de rayonnement linéaire, des lentilles cylindriques et/ou des miroirs cylindriques sont utilisés et en ce que le champ de rayonnement est amené à la pièce à travers une ouverture dans une matrice à plier.

3. Procédé selon la revendication 1, caractérisé en ce que, comme dispositif pour former le champ de rayonnement linéaire, un guide d'ondes fendu est utilisé dont la fente s'étend parallèlement à la ligne de pliage, où le faisceau laser est couplé axialement soit à un côté, soit aux deux côtés du guide d'ondes.

4. Procédé selon les revendications 1 et 3, caractérisé en ce que le guide d'ondes guidant le faisceau laser est déplaçable par un guidage parallèlement à la ligne de pliage et est appliqué à celle-ci.

5. Procédé selon l'une ou plusieurs des revendications précédentes, caractérisé en ce que plusieurs champs de rayonnement linéaires sont disposés selon un décalage spatial de façon à ce que toute la ligne de pliage soit irradiée sur toute sa longueur.

6. Procédé selon l'une ou plusieurs des revendications précédentes, caractérisé en ce qu'un faisceau laser pulsé est amené à la pièce.

7. Procédé selon l'une ou plusieurs des revendications précédentes, caractérisé en ce que le champ de rayonnement agit le long de la ligne de pliage uniformément sur la pièce, pour créer la zone d'échauffement.

8. Procédé selon l'une ou plusieurs des revendications précédentes, caractérisé en ce que le long de la ligne de pliage, plusieurs champs de rayonnement juxtaposés ou se chevauchant agissent sur la pièce.

9. Procédé selon l'une ou plusieurs des revendications précédentes, caractérisé en ce que, pour créer la zone d'échauffement le long de la ligne de pliage, des champs de rayonnement sont amenés à agir sur des surfaces opposées de la pièce, pour créer la zone d'échauffement.
